# EUROPÄISCHE PATENTSCHRIFT

(11) **EP 3 580 117 B1**
(45) Veröffentlichungstag und Bekanntmachung des Hinweises auf die Patenterteilung: **05.01.2022**
(21) Anmeldenummer: 18704892.1
(22) Anmeldetag: 29.01.2018
(51) Int. Cl.: B60R 19/34, B62D 21/15, B62D 33/06, B62D 33/067, B62D 53/08

(54) **KOLLISIONSSCHUTZSYSTEM FÜR NUTZFAHRZEUGE**
COLLISION PROTECTION SYSTEM FOR UTILITY VEHICLES
SYSTÈME DE PROTECTION CONTRE LES COLLISIONS POUR VÉHICULES UTILITAIRES

(30) Priorität: 13.02.2017 DE 102017102744
(43) Veröffentlichungstag der Anmeldung: 18.12.2019
(73) Patentinhaber: Voith Patent GmbH, 89522 Heidenheim (DE)
(72) Erfinder: ROMUND, Mathias, 21710 Engelschoff (DE)
(74) Vertreter: Voith Patent GmbH - Patentabteilung
(86) Internationale Anmeldenummer: PCT/EP2018/052037
(87) Internationale Veröffentlichungsnummer: WO 2018/145928

(56) Entgegenhaltungen:
- EP-A2- 1 477 391
- WO-A1-2015/187083
- DE-A1- 10 130 637
- DE-A1- 19 849 358
- DE-A1-102005 034 470
- DE-A1-102008 003 488
- DE-A1-102014 208 682
- JP-A- H11 180 351

## Beschreibung

Die Erfindung betrifft ein Kollisionsschutzsystem für Nutzfahrzeuge mit einem sich in Längsrichtung des Fahrzeuges erstreckenden Fahrgestell mit einem Tragrahmen und einer in Längsrichtung des Fahrgestells betrachtet am vorderen Endbereich des Tragrahmens im Frontbereich des Fahrzeuges angeordneten Fahrerkabine.

Bekannte Kollisionsschutzsysteme sind bezogen auf die Fahrersicherheit nur auf die eigentliche, den Arbeitsraum des Fahrers umgebende Kabine beschränkt. Diese umfasst in Einbaulage betrachtet in vertikal zueinander versetzen Horizontalebenen angeordnete sogenannte Crashgürtel, welche um den Arbeitsraum des Fahrers verlaufen. Diese Crashgürtel sind jedoch durch eine geringe Steifigkeit gegenüber Frontalkollisionen charakterisiert, so dass dabei auftretende Verformungen in den für den Fahrer vorgesehenen Raum eingetragen werden.

Aufgrund der häufigen Anordnung des Antriebes unter der Fahrerkabine besteht ferner das Erfordernis, diese nach vorn kippbar am Fahrgestell zu lagern, um den Zugang zu den einzelnen Funktionskomponenten zu Wartungs- und Reparaturzwecken zu ermöglichen. Die Fahrerkabine ist im Allgemeinen nur an zwei Scharnieren vorne und zwei Arretierungen hinter der Kabine an den Haupttragrahmen angeschlossen. Je nach Ausführung des Fahrzeuges sind am Tragrahmen hinter der Fahrerkabine Aufbauten, wie Koffer, Tanks oder andere Spezialaufbauten vorgesehen. Bei Ausbildung als Zugmaschine für einen Sattelauflieger sind am Tragrahmen entsprechende Sattelkupplungen gelagert. Im Fall einer Frontalkollision reißt die Fahrerkabine auf den vier Kontaktstellen zum Tragrahmen und wird zwischen dem Hindernis und der eigenen Ladung zerquetscht.

Bei Zugfahrzeugen, welche mit einem Sattelauflieger gekoppelt sind, wird im normalen Fahrbetrieb die Sattelkupplung auf Zug belastet und die Zugkräfte werden über die Verbindung der Sattelkupplung mit dem Fahrgestell in das Fahrgestell des Zugfahrzeuges eingeleitet. Bei einem frontalen Crash oder Auffahrunfall werden jedoch Stoßkräfte in die Sattelkupplung, insbesondere Sattelplatte eingetragen, die im günstigsten Fall nur Verformungen am Fahrgestell ohne Auswirkung auf die Fahrerkabine zur Folge haben, jedoch in der Mehrzahl der Fälle schwere Unfälle mit Zerstörungen an der Fahrerkabine und Personenschäden durch Verformungen des Fahrgestells und ggf. ein Abheben der Sattelplatte und eine Verschiebung dieser mit dem daran gekoppeltem Auflieger in die Fahrerkabine zur Folge haben.

Um dies zu verhindern, sind Konzepte bekannt, welche bei einem Frontalaufprall die auftretenden Kräfte zur Veränderung der Lage der Fahrerkabine, insbesondere Auslenkung unter Veränderung von dessen Schwerpunktlage oder Verschiebung nutzen. Dabei werden die bei dieser Bewegung im Weg liegenden Funktionsteile gegebenenfalls einer Deformation ausgesetzt, welche dem Abbau und der Absorption des beim Frontalaufprall erfolgenden Energieeintrages dienen. Stellvertretend wird hierzu auf die Druckschrift DE 10 2005 034 470 A1 verwiesen.

Andere Ausführungen sind dadurch charakterisiert, dass ein Teil des der Fahrerkabine nachgelagerten Raumes, insbesondere der Raum, welcher für eine Schlafkabine vorgesehen ist, als Deformationsbereich ausgebildet ist. Dies verhindert jedoch bei einem Frontalaufprall nicht die aktive Einleitung der Kräfte in das Crashgürtelsystem .

Ausführungen von Systemen zum Abbau von bei Unfällen in ein Fahrzeug eintragbarer Energie sind in Form von an örtlich begrenzten Bereichen am Fahrzeug angeordneten Einheiten in unterschiedlichen Ausführungen bekannt.

Die Druckschrift DE 101 30 637 A1 offenbart einen Unterfahrschutz zur Vermeidung des Unterfahrens von Personenkraftwagen unter Nutzfahrzeuge, welcher aus einem kaskardierendem System aus Faltenbeuler, Kragträger und einem querversteiften Fahrzeugrahmen besteht. Dieser kann frontseitig am Fahrzeug vorgesehen werden.

DE 10 2008 003 488 A1 offenbart einen Rahmenkopf für einen Fahrzeugrahmen, bei welchem zwei seitliche Rahmenelemente vorgesehen sind, die an einem jeweils zugeordneten Rahmenlängsträger des Fahrzeugrahmens befestigbar sind, Die Rahmenelemente weisen Deformationsbereiche auf, welche im Crashfall unter Abbau von Energie deformierbar sind.

DE 198 49 358 A1 offenbart einen Stoßfänger, DE 10 2014 208 682 A1 einen verformbaren Längsträger mit integriertem dynamischen Dämpfungselement.

EP 1477391 A2 offenbart ein zwischen Fahrzeugrahmen und Führerhaus in Fahrzeuglängsrichtung wirkendes Stoßmittel.

Die vorgenannten Ausführungen sind dadurch charakterisiert, in jeweils einem vordefinierten örtlichen Bereich wirksam zu werden und sind jeweils auf einen bestimmten Eintrag an Stoßenergie ausgelegt.

Der Erfindung liegt die Aufgabe zugrunde, ein Kollisionssystem für ein Nutzfahrzeug der eingangs genannten Art derart weiterzuentwickeln, dass die genannten Nachteile vermieden werden. Insbesondere ist ein Kollisionsschutzsystem für Nutzfahrzeuge bereitzustellen, welches in der Lage ist, die Sicherheit des Fahrers auch bei sehr hohen Kräften in das Fahrzeug, insbesondere bei einem Frontalaufprall und die Unversehrtheit eines dazu erforderlichen und dem Fahrer zur Verfügung stehenden Raumbereiches zu gewährleisen. Dabei soll in einem Crashfall die auf das Fahrzeug, insbesondere die Fahrerkabine einwirkende Aufprallenergie soweit wie möglich im Bereich dieser abgebaut werden, um die maximalen Beschleunigungen und Kräfte zu begrenzen, wobei ein unkontrolliertes Verformen der Konstruktion wirkungsvoll verhindert werden soll, mit dem Ziel, in einem Crashfall einen Überlebensraum für den Fahrzeugführersicherzustellen. Der Abbau der der Stoßenergie soll dabei nach Möglichkeit gezielt erfolgen.

Die erfindungsgemäße Lösung ist durch die Merkmale des Anspruchs 1 charakterisiert. Vorteilhafte Ausgestaltungen sind in den Unteransprüchen beschrieben.

Ein erfindungsgemäßes Kollisionsschutzsystem für Nutzfahrzeuge mit einem sich in Längsrichtung des Fahrzeuges erstreckenden Fahrgestell mit einem Tragrahmen und einer in Längsrichtung des Fahrgestells betrachtet am vorderen Endbereich des Tragrahmens im Frontbereich des Fahrzeuges angeordneten Fahrerkabine, ist dadurch gekennzeichnet, dass dieses eine Vielzahl von zumindest im Bereich der Erstreckung der Fahrerkabine angeordneten Energieverzehrelementen umfasst, die ausgelegt und angeordnet sind, im Kollisionsfall in Abhängigkeit der Größe einer in das Fahrzeug eingeleiteten Stoßkraft, insbesondere der in Längsrichtung des Fahrzeuges eingeleiteten Richtungskomponente der Stoßkraft in vordefinierter Abfolge durch zumindest teilweise irreversible Verformung und/oder zumindest teilweise Zerstörung anzusprechen.

Unter einem Energieverzehrelement im Sinne der Erfindung werden insbesondere ein- oder mehrteilige flächige oder räumliche Strukturen, insbesondere Bauteile, Baugruppen oder ganze Vorrichtungen verstanden, welche wenigstes einen Energieverzehrbereich aufweisen. Der Energieverzehrbereich ist ein Bereich, welcher den bei Stoßkrafteintrag in diesen eingeleiteten oder an diesem wirksam werdenden Energieeintrag durch Umwandlung in Verformungsarbeit, insbesondere irreversible Verformung, destruktive Verformung und/oder Zerstörung abdämpft bzw. abbaut. Die Umwandlung des in den Energieverzehrbereich eingeleiteten Energieeintrages wird als Ansprechen bezeichnet.

Mit der erfindungsgemäßen Lösung wird ein System aus einzelnen Energieverzehrelementen bereitgestellt, die kaskadierend zum Einsatz gelangen. Dies bietet den Vorteil, die einzelnen Energieverzehrelemente unterschiedlich auslegen und dimensionieren zu können sowie deren Wirkungsweise gezielt in vordefinierte Bereiche im Fahrzeug zu verlegen, um im Kollisionsfall den Schädigungsverlauf innerhalb des Fahrzeuges gezielt zu beeinflussen. Verformungsbereiche können so gezielt in das Fahrzeug verlegt werden, während andere Bereiche in Abhängigkeit von der Größe der eingeleiteten Stoßkraft von dieser ausgenommen werden. Je nach Anordnung und Auslegung der Energieverzehrelemente kann die durch den Aufprall eingeleitete Kraft gezielt in vordefinierte und für den Fahrer unkritische Bereiche gelenkt, in diesen über die Energieverzehrelemente abgebaut und in das Fahrgestell eingeleitet werden.

In vorteilhafter Ausbildung ist in der Fahrerkabine ein als Überlebensraum definierter Bereich zum Aufenthalt des Fahrers während eines Kollisionsfalls vorgesehen. Die einzelnen Energieverzehrelemente zum aktiven Energieverzehr sind außerhalb des Überlebensraumes angeordnet. Durch die Anordnung der Energieverzehrelemente in den unterschiedlichsten Bereichen des Fahrzeuges, welche im Kollisionsfall in Abhängigkeit von deren Auslegung in vordefinierter Reihenfolge angesprochen werden, kann ferner der dann noch in einen vorgesehenen Überlebensbereich des Fahrers eingeleitete Anteil gering gehalten werden.

Der den Überlebensraum definierende Bereich ist von einer verformungssteifen Rahmenstruktur umgeben, wobei diese vorzugsweise von einem Monocoque oder einer selbsttragenden in Längsrichtung des Fahrzeuges betrachtet verformungssteifen Rahmenstruktur gebildet wird. Diese verformungssteife Rahmenstruktur ist des Weiteren vorzugsweise kippbar am Tragrahmen gelagert, da im Hinblick auf die Zugängigkeit zu den Antriebskomponenten das gesamte Fahrerhaus gekippt werden muss. Unter einem Monocoque wird dabei insbesondere ein einteiliger, aus flächigen Elementen gebauter, teils hohler Körper als Bestandteil des Fahrgestells verstanden. Dieses ist durch eine hohe Steifigkeit bei geringer Masse charakterisiert und kann verschiedenartig ausgebildet sein. Im einfachsten Fall wird auf Faserverbundwerkstoff-Strukturen zurückgegriffen, welche eine hohe Steifigkeit aufweisen. Dies gilt ferner auch für die selbstragende Rahmenstruktur, die beispielsweise von bügelartig ausgebildeten A-Säulen gebildet wird, die über eine Boden- und/oder Dachkonstruktion oder andere Querträger miteinander verbunden sind. Die verformungssteife Rahmenstruktur bzw. das Monocoque dienen der festen Begrenzung eines Raumbereiches bis zu vordefinierten maximal an diesen wirksamen Kräften und der Verhinderung des Eindringens von im Kollisionsfall verformten Bauteilen der Umgebung des Überlebensraumes. Besonders bevorzugt werden daher den Überlebensraum schalenartig umschließende Monocoque-Strukturen zum Einsatz gelangen.

Die steife, den Überlebensraum begrenzende Rahmenstruktur ist vorzugsweise derart ausgelegt und dimensioniert, dass diese nicht durch normale Belastungen bei einem Unfall zwischen zwei 40-Tonnen Nutzfahrzeugen zerstört werden kann. Dabei ist jedoch neben der erforderlichen Steifigkeit auch die Negativ-Beschleunigung (Abbremsen) bei einem Crash zu beachten, da viele Verletzungen der Fahrer aus dieser resultieren. Die steife Rahmenstruktur ist dazu in einer vorteilhaften Weiterbildung mit aktiven Rückhaltesystemen, beispielsweise einem Airbag ausgerüstet, um die Negativbeschleunigung weiter abzumildern.

Die verformungssteife Rahmenstruktur kann ferner vorteilhaft so ausgeführt sein, das zwei separate Zellen für Fahrer und Beifahrer dabei entstehen. Der zwischen diesen befindliche Mitteltunnel kann als Steifigkeitserhöhung genutzt werden und als Trennlinie dieser zwei Zellen fungieren

In einer besonders vorteilhaften Weiterbildung ist das einzelne Energieverzehrelement derart ausgelegt und angeordnet, in einem Frontalcrash beschreibenden Kollisionsfall mit Hauptrichtungskomponente der Stoßkraft in Längsrichtung des Fahrzeuges, bevorzugt vollständig in Längsrichtung ausgerichtete Stoßkraft diese durch zumindest teilweise irreversible Verformung und/oder zumindest teilweise Zerstörung aufzunehmen. Das einzelne Energieverzehrelement ist dann vorzugsweise in Längsrichtung ausgerichtet. Diese Anordnung und Ausbildung stellt die für den in der Praxis auftretenden Hauptkollisionsfall vorgesehene Anwendung dar und ist ferner geeignet, auch Stoßkraftkomponenten mit geringer Abweichung von der Längsrichtung mit aufzunehmen, welche beispielsweise bei leichtem Seitencrash in das Fahrzeug eingeleitet werden. Um weitere Kollisionsrichtungen, beispielsweise auch einen Seitencrash in größerem Winkel zur Längsrichtung mit abdecken zu können, wären zusätzliche Energieverzehrelemente erforderlich, deren Ausrichtung mit Hauptrichtungskomponente in der gewünschten Wirkungsrichtung liegt.

Um die im Kollisionsfall in das Fahrzeug eingeleitete Aufprallenergie zielgerichtet in das Fahrgestell bzw. den Tragrahmen ableiten zu können, ist das einzelne Energieverzehrelement jeweils wenigstens mittelbar am Tragrahmen oder einem mit diesem gekoppelten Bauteil abstützend angeordnet. Die Kräfte müssen damit nicht in Funktionskomponenten oder Anbauteilen an diesen abgestützt werden sondern werden in die ohnehin vorhandene verformungssteifen Tragrahmenkonstruktion und damit auch außerhalb des Aufenthaltsbereiches des Fahrers eingeleitet.

In einer vorteilhaften Ausführung sind jeweils ein oder mehrere Energieverzehrelemente in Crashzonen definierenden räumlichen Bereichen am Fahrzeug angeordnet, wobei die jeweils einer derartigen Crashzone zugeordneten Energieverzehrelemente durch vordefinierte Eigenschaften, insbesondere eine vordefinierte Steifigkeit und/oder Festigkeit charakterisiert sind. Die Bereiche sind dabei als räumliche Bereiche zu verstehen, in welchen auch andere Funktionsteile und Komponenten angeordnet sind, welche beispielsweise dem Antrieb des Fahrzeuges und der Funktionsweise des Antriebsstranges dienen. Es versteht sich, dass die Bereiche nicht vollständig mit den Energieverzehrelementen belegt sind, sondern diese sinnvoll in diese Bereiche integriert werden.

Die die Energieverzehrelemente charakterisierenden Eigenschaften bestimmen das Verhalten und den Widerstand der jeweiligen Energieverzehrbereiche gegenüber den in diese eingeleiteten Kräften und ermöglichen dadurch die Wirkung der eingeleiteten Stoßkräfte in den unterschiedlichen Bereichen des Fahrzeuges gezielt zu steuern. Dies ist insbesondere dann von Vorteil, wenn in einem bestimmten räumlichen Bereich des Fahrzeuges ein gewünschtes Deformationsverhalten eingestellt werden soll. Des Weiteren können durch gezielte Eigenschaftszuweisung durch die Ausbildung, Dimensionierung und/oder Ausrichtung des jeweiligen Energieverzehrelementes in einem eine Crashzone definierenden Bereich, im Fahrzeug Bereiche mit unterschiedlichen Funktionen (z.B. zielgerichtete Einleitung der Kräfte in wirkungsmäßig nachgeordnete Crashzonen, die Kompensation von Stoßkräften innerhalb eines vordefinierten Größenbereiches) bei auftretender Kollision geschaffen werden. So können beispielsweise im Fahrzeug gezielt Crashzonen definiert werden, in denen den in diese eingeleiteten Kräften beim Aufprall ein unterschiedlicher Widerstand entgegensetzt wird, damit ein Ansprechen in der gewünschten Reihenfolge gewährleistet werden kann. Des Weiteren kann über die Eigenschaftszuweisung auch das Ansprechen, beispielsweise durch die Auslegung auf eine vordefinierte Ansprechkraft, der Grad der Verformung, insbesondere Deformation der jeweiligen Zone und die Deformationsrichtung bestimmt werden.

In einer vorteilhaften Weiterbildung ist innerhalb eines eine einzelne Crashzone definierenden Bereiches wenigstens jeweils ein, vorzugsweise sind jedoch mehrere Energieverzehrelemente angeordnet. Die einzelnen Energieverzehrelemente innerhalb einer einzelnen Crashzone sind derart angeordnet und ausgebildet, unter Einwirkung einer Stoßkraft gleichzeitig oder zumindest teilweise einander überlagernd anzusprechen. Diese Möglichkeit bietet den Vorteil, zum einen die Crashzone hinsichtlich der Wirkungsweise der einzelnen Energieverzehrelemente weiter unterteilen zu können und ferner auch eine optimale Anpassung an räumliche Gegebenheiten innerhalb eines räumlichen und die Crashzone beschreibenden Bereiches vornehmen zu können.

Um das Kollisionsschutzsystem optimal an die Anforderungen für den jeweiligen Einsatzfall des Fahrzeuges anpassen zu können, sind die einzelnen Energieverzehrelemente derart ausgebildet und angeordnet, dass jeweils die einer Crashzone zugeordneten Energieverzehrelemente gemäß einer der nachfolgenden Möglichkeiten ansprechen:
a) vor oder nach dem Ansprechen der Energieverzehrelemente einer anderen Crashzone
b) zumindest teilweise überlagert zu den Energieverzehrelementen einer anderen Crashzone.

Mit Ausführung gemäß einer ersten Variante a) ist ein rein kaskardierendes Kollisionsschutzsystem mit klar abgegrenzter Anordnung und Abfolge der Wirkungsweise der einzelnen Zonen möglich. Gemäß der zweiten Variante b) kann jedoch auch auf die gleichzeitige Wirkungsweise unterschiedlicher Crashzonen zurückgegriffen werden. Dies ist insbesondere dann von Vorteil, wenn beispielsweise der Überlebensraum durch die Wirkung der Energieverzehrelemente einer Crashzone verschoben wird. In diesem Fall wird vorzugsweise eine der Verschiebung entgegenwirkende Crashzone dem Überlebensraum nachgeordnet vorgesehen.

In vorteilhafter Ausführung sind in Fahrzeuglängsrichtung vom Frontbereich ausgehend betrachtet dem Überlebensraum wenigstens eine oder mehrere Energieverzehrelemente in Längsrichtung des Fahrzeuges betrachtet vorgeordnet angeordnet, wobei ein oder mehrere Energieverzehrelemente in einer ersten als Einleitungszone bezeichneten Crashzone angeordnet sind. Diese Einleitungszone stellt dabei die bei einem Kollisionsfall mit Hauptrichtungskomponente in Längsrichtung des Fahrzeuges erste Zone dar, die mit dem Hindernis wenigstens mittelbar in Kontakt gelangt. Dieser kommt daher auch die Funktion einer optimalen Einleitung und Übertragung in die weiteren möglichen Crashzonen am Fahrzeug zu. Die in der Einleitungszone angeordneten Energieverzehrelemente werden daher vorzugsweise von Deformationselementen mit geringer Steifigkeit, insbesondere weichen Deformationskörpern zur definierten Einleitung bzw. Übertragung der von diesen aufgenommenen Stoßkräfte zu nachgeordneten und/oder wirkungsmäßig nachgelagerten Energieverzehrelementen der gleichen oder anderer Crashzonen. Vorzugsweise sind die Energieverzehrelemente der Einleitungszone von am vorderen Endbereich des Tragahmens angeordneten Strukturen gebildet, insbesondere sich einseitig am Tragrahmen abstützenden An- oder Aufbaustrukturen in Form von Wabenstrukturen, Verformungsrohren, Faserverbundwerkstoff-Strukturen.

Gemäß einer besonders vorteilhaften Weiterbildung der vorbeschriebenen Ausführung ist es vorgesehen, in Längsrichtung des Fahrzeuges betrachtet vom Frontbereich ausgehend ein oder mehrere Energieverzehrelemente in zumindest einer weiteren zwischen dieser ersten Einleitungszone und dem Überlebensraum angeordneten Crashzone anzuordnen. Dies bietet den Vorteil, dass die Einleitungszone zum einen hinsichtlich der Einleitung, Ausrichtung und Übertragung der Kräfte als Hauptfunktion optimiert werden kann und der Anteil an irreversibler bzw. destruktiver Verformungsarbeit in dieser Zone gering gehalten werden kann, da die Kompensation der Stoßkräfte hauptsächlich in der zwischengeordneten Crashzone vorgenommen wird, die hinsichtlich dieser Anforderung besser optimiert werden kann. In besonders vorteilhafter Ausbildung sind dazu die ein oder mehreren Energieverzehrelemente der zwischen der Einleitungszone und dem Überlebensraum angeordneten Crashzone direkt zwischen Tragrahmen und Überlebensraum angeordnet.

In einer weiteren vorteilhaften Weiterbildung der vorbeschriebenen Ausführungen sind in Fahrzeuglängsrichtung vom Frontbereich ausgehend betrachtet dem Überlebensraum wenigstens zwei oder mehrere Energieverzehrelemente in Längsrichtung des Fahrzeuges betrachtet nachgeordnet angeordnet. Dies ist insbesondere bei einer möglichen vorgesehenen Relativbewegung des Überlebensraumes, insbesondere Verschiebung unter Einwirkung der Stoßkräfte, welche über die Zwischenzone nicht vollständig abgebaut werden konnten von Vorteil. In diesem Fall sind die ein oder mehreren, in Längsrichtung dem überlebensraum nachgeordnet angeordneten Energieverzehrelemente direkt zwischen Tragrahmen und Überlebensraum angeordnet.

Da den Energieverzehrelementen der zwischen Einleitungszone und Überlebensraum angeordneten Crashzone und/oder der dem Überlebensraum nachgeordneten Crashzone/Crashzonen der aktive Abbau bzw. die Kompensation des Energieeintrages als Hauptfunktion zu kommt, sind diese zum Abbau hoher Stoßkräfte durch eine hohe Deformationssteifigkeit charakterisiert. Bezüglich der Ausbildung der einzelnen Energieverzehrelemente bestehen keine Restriktionen. Es werden jedoch Elemente mit kompakter Bauform und hohem Energieverzehrvermögen gewählt, wobei hier insbesondere Energieverzehrelemente zum Einsatz gelangen, die ein als Hohlkörper ausgebildetes Verformungselement aufweisen, welches unter Krafteinwirkung durch eine Düse unter Verformung und Zerstörung dessen gedrückt wird. In besonders vorteilhafter Ausbildung handelt es sich bei dem Hohlkörper um ein Verformungsrohr in Form eines hohlzylindrischen Elementes aus einem Faserverbundwerkstoff, welches beim Durchgang durch die Düse zerfasert wird.

Ist das Fahrzeug als Zugfahrzeug zur Kopplung mit einem Sattelauflieger ausgebildet, ist am Tragrahmen der Fahrerkabine nachgeordnet eine Sattelkupplung mit einer Sattelkupplung mit einer Sattelplatte, die mit einer Kupplung am Sattelauflieger verbindbar ist, wobei die Sattelkupplung wenigstens mittelbar mit dem Rahmen verbunden ist. Hier besteht die Möglichkeit, zumindest ein Energieverzehrelement zwischen der Sattelkupplung und dem Rahmen anzuordnen, welche bei Einleitung einer, eine vordefinierte kritische Stoßkraft überschreitenden und in Längsrichtung des Fahrgestells zum vorderen Endbereich ausgerichteten Stoßkraftkomponente in die Sattelkupplung anspricht.

Die Anordnung und Integration dieses zusätzlichen Energieverzehrs bietet den Vorteil bei Wirksamwerden von Stoßkräften an der Sattelkupplung bereits einen hohen Kraftanteil vor einem Eintrag in das Fahrgestell und das Fahrerhaus mit einhergehender Verformung zu kompensieren. Das Energieverzehrelement entzieht dabei bei einem Unfall mittig dem Fahrzeugverbund Energie und die weiterführende Crashstruktur in der Fahrzeugfront oder dem Fahrzeugheck muss weniger Energie aufnehmen. Der Fahrer wird somit besser geschützt. Dieses zusätzlich vorsehbare Energieverzehrelement kann in den ohnehin vorhandenen Bauraum integriert werden und erlaubt eine Kompensation hoher Kräfte ohne den Tragrahmen selbst hinsichtlich seiner Dimensionierung auf die Aufnahme höherer Kräfte modifizieren zu müssen.

Bezüglich der Ausgestaltung der Energieverzehrvorrichtung besteht eine Mehrzahl von Möglichkeiten. In einer vorteilhaften und besonders einfachen Ausführung umfasst die Energieverzehrvorrichtung zumindest ein Energieverzehrelement mit zumindest einem Energieverzehrbereich und ein mit dem Energieverzehrelement zusammenwirkendes, eine Düse bildendes Gegenelement. Die Stoßkraft wird in das Energieverzehrelement derart eingeleitet, dass dieses durch die Düse gepresst wird. Diese Lösung erlaubt eine Kompensation eines hohen Energieeintrages auf kleinstem Bauraum mit geringer Anzahl von Bauteilen.

Gemäß einer besonders vorteilhaften Ausbildung ist das Energieverzehrelement von einem rohrförmigen Element gebildet, dessen Längsachse in Längsrichtung des Fahrgestells verlaufend ausgerichtet ist. Das Gegenelement ist von einem das rohrförmige Element in Umfangsrichtung umschließenden und sich über einen Teilbereich der Erstreckung des Energieverzehrelementes in Längsrichtung erstreckenden weiteren rohrförmigen Element gebildet. Das Gegenelement stützt sich am Tragrahmen ab. Diese Ausführung bietet den Vorteil der Bereitstellung einer besonders einfach gestalteten Energieverzehrvorrichtung mit geringer Bauteilanzahl unter optimaler Ausnutzung bestehenden Bauraums.

Grundsätzlich ist eine Vielzahl von Ausführungen der Energieverzehrvorrichtungen denkbar. Dabei können die gängigen Energieverzehrelemente aus dem Schienenfahrzeugbau zur Anwendung gelangen. Denkbar sind zum einen klassische Verformungsrohre, insbesondere Stahl-Aufweitungsrohre, wie beispielsweise in Kupplungen der Fa. Voith Turbo Scharfenberg GmbH verwendet oder zum anderen "Abschälabsorber" nach dem Prinzip der Firma Axtone. Bei letzteren sind um ein Stahlrohr mehrere Schneidelemente angeordnet, die beim Durchdrücken eines Rohres durch Stahlschneiden Energie abbauen.

Gemäß einer besonders bevorzugten Ausbildung gelangen jedoch Faserverbundwerkstoff-Energieverzehrelemente, ganz besonders bevorzugt GFK-Energieverzehrelemente aufgrund des dadurch bedingten geringen Zusatzgewichtes zum Einsatz. Dabei kann der Innendurchmesser eines derartigen Faserverbundwerkstoff-Rohres konisch ausgeführt sein, um einen ansteigenden Energieverzehr über die Verbrauchslänge zu gewährleisten.

In besonders vorteilhafter Ausbildung ist zur Kompensation eines hohen Energieeintrages der zumindest eine Energieverzehrbereich des Energieverzehrelementes, vorzugsweise das gesamte Energieverzehrelement aus einem faserverstärkten Kunststoff ausgebildet. Die Ausbildung aus faserverstärktem Kunststoff erlaubt durch die Wahl einer geeigneten Faserarchitektur die Anpassung an konkrete Krafteinleitungsfälle sowie die Kompensation sehr großer Kräfte.

Das Energieverzehrelement kann in einer Weiterbildung als ein im Innendurchmesser konisch ausgeführtes Rohr für ansteigendes Kraftniveau ausgebildet sein. In einer weiteren Weiterbildung kann das Energieverzehrelement hinsichtlich der Innendurchmesser auch mit einer oder mehreren Stufen für ein zwei- oder mehrstufiges Kraftniveau ausgebildet sein.

Bezüglich der Ausgestaltung des Rahmens des Fahrgestells besteht eine Mehrzahl von Möglichkeiten. Dieser umfasst im einfachsten Fall wenigstens zwei in Längsrichtung ausgerichtete Längsträger und diese miteinander verbindende Querträger.

Die erfindungsgemäße Lösung wird nachfolgend anhand von Figuren erläutert. Darin ist im Einzelnen folgendes dargestellt:
- Figur 1: zeigt eine erfindungsgemäße Unterteilung eines Fahrzeuges in crashrelevante Bereiche;
- Figur 2: zeigt beispielhaft eine erste Ausbildung der Anordnung von crashrelevanten Zonen im Fahrzeug mit beispielhafter Anordnung von Energieverzehrelementen in diesen;
- Figur 3: zeigt beispielhaft eine zweite Ausbildung der Anordnung von crashrelevanten Zonen im Fahrzeug mit beispielhafter Anordnung von Energieverzehrelementen in diesen;
- Figuren 4a.1 bis 4a.3: zeigen beispielhaft mögliche Ausbildungen von Energieverzehrelementen;
- Figuren 4b.1 bis 4b.3: zeigen beispielhaft für die Ausbildungen in den Figuren 4a.1 bis 4a.3 die Energieverzehrelemente nach dem Ansprechen;
- Figur 5a: zeigt beispielhaft eine Ausbildung der verformungssteifen Rahmenstruktur in Form eines Monocoques;
- Figur 5b: zeigt beispielhaft eine Ausbildung der verformungssteifen Rahmenstruktur in Form einer Struktur aus bügelartigen Elementen;
- Figur 6: zeigt beispielhaft eine Ausführung eines Energieverzehrelementes zur Anordnung zwischen Sattelplatte und Tragrahmen.

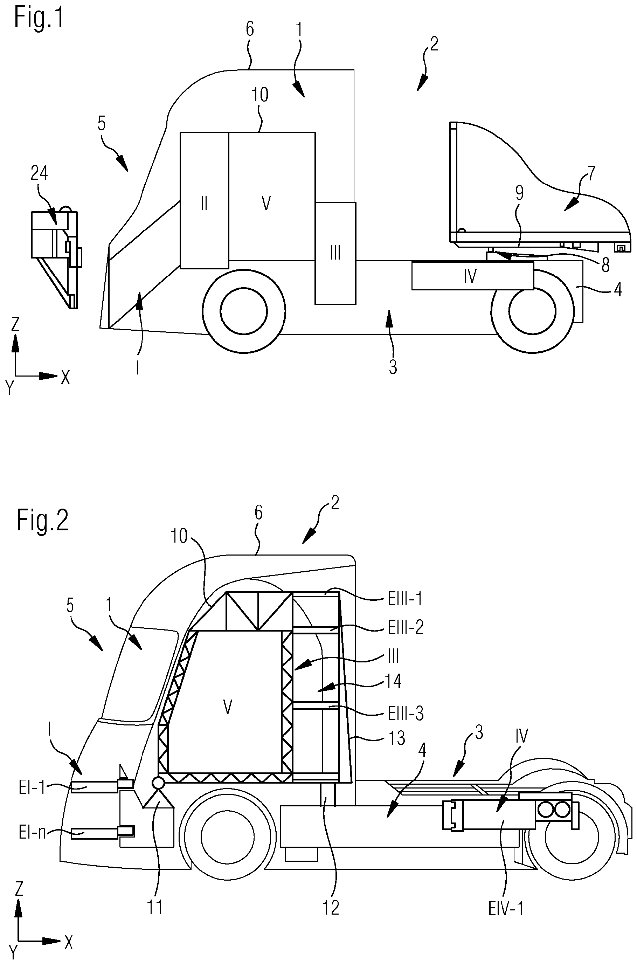

Figur 1 verdeutlicht in schematisiert vereinfachter Darstellung eine besonders vorteilhafte Anordnung, Aufbau und die Funktionsweise eines erfindungsgemäßen Kollisionsschutzsystems 1 für Nutzfahrzeuge 2 anhand einer Seitenansicht auf dieses. Zur Verdeutlichung der einzelnen Richtungen ist ein Koordinatensystem an das Nutzfahrzeug 2 angelegt. Die X-Richtung entspricht der Längsrichtung, die Y-Richtung der Richtung Senkrecht zu dieser, insbesondere der Breitenrichtung. Die Z-Richtung entspricht der Höhenrichtung.

Das Nutzfahrzeug 2 weist ein sich in Längsrichtung des Fahrzeuges erstreckendes Fahrgestell 3 mit einem Tragrahmen 4 und einer in Längsrichtung des Fahrgestells 3 betrachtet am vorderen Endbereich 5 des Tragrahmens 4 im Frontbereich des Fahrzeuges angeordneten Fahrerkabine 6 auf. Erfindungsgemäß ist eine Vielzahl von zumindest im Bereich der Erstreckung der Fahrerkabine 6 angeordneten Energieverzehrelementen E vorgesehen, die ausgelegt und angeordnet sind, in einem Kollisionsfall in Abhängigkeit der Größe einer in das Nutzfahrzeug eingeleiteten Stoßkraft in vordefinierter Abfolge durch zumindest teilweise irreversible Verformung und/oder zumindest teilweise Zerstörung anzusprechen. Dabei ist jeweils ein oder sind mehrere Energieverzehrelemente in Crashzonen definierenden räumlichen Bereichen am Nutzfahrzeug 2 angeordnet. Im dargestellten Fall sind vier derartige Crashzonen definierende Bereiche I, II, III, IV vorgesehen. Die einzelnen als Crashzonen I bis IV bezeichneten Bereiche entsprechen räumlichen Bereichen im Fahrzeug, welche jeweils durch Erstreckung in Längs-, Breiten- und Höhenrichtung charakterisiert sind und mögliche Anordnungsbereiche für Energieverzehrelemente definieren. Ferner ist in der Fahrerkabine ein als Überlebensraum V definierter Bereich zum Aufenthalt des Fahrers während eines Kollisionsfalls vorgesehen. Diesem sind die als Crashzonen definierten Bereiche I, II, III, IV zugeordnet, die in unterschiedlichen Bereichen des Nutzfahrzeuges 2 angeordnet sind und in vordefinierter Abfolge zum Einsatz gelangen und somit den Überlebensraum V vor einem direktem Stoßkrafteintrag in diesen schützen. Die in der Figur 1 dargestellte Anordnung ist für Kollisionen mit einer Ausrichtung der Hauptkomponente der Stoßkraft in Längsrichtung des Nutzfahrzeuges 2, insbesondere für Frontalkollisionen mit einem Hindernis 24 unter Einleitung einer Stoßkraft direkt in Längsrichtung des Nutzfahrzeuges 2 besonders effektiv.

Der als Überlebensraum V definierte Bereich zum Aufenthalt des Fahrers während eines Kollisionsfalls ist vorzugsweise von einer verformungssteifen Rahmenstruktur 10 umschlossen, wobei diese von einem Monocoque oder einer selbsttragenden, zumindest in Längsrichtung des Fahrzeuges betrachtet verformungssteifen Struktur aus Trägern gebildet wird. Unter einem Monocoque wird dabei insbesondere ein einteiliger, aus flächigen Elementen wie Platten oder sandwichartig angeordneten Elementen gebauter, teils hohler Körper verstanden.

In jeder der einzelnen Crashzonen I bis IV ist zumindest ein, vorzugsweise sind eine Mehrzahl von Energieverzehrelementen vorgesehen. Die jeweils einer derartigen Crashzone zugeordneten Energieverzehrelemente sind vorzugsweise durch vordefinierte Eigenschaften, insbesondere eine vordefinierte Steifigkeit und/oder Festigkeit charakterisiert. Dabei können eine Mehrzahl von Energieverzehrelementen einer Crashzone mit gleicher Ausbildung, Auslegung und Dimensionierung ausgeführt sein, wobei die Anordnung in gleichen oder unterschiedlichen, d.h. in Längsrichtung zueinander versetzten und durch jeweils eine Senkrechte zur Längsrichtung in Y- und Z-Richtung beschreibbaren Ebenen erfolgen kann.

Denkbar ist es jedoch auch, wenn die Energieverzehrelemente einer Crashzone derart angeordnet und ausgelegt sind, dass die einzelnen Energieverzehrelemente sich in ihrer Ausbildung, Auslegung und/oder Dimensionierung unterscheiden. Eine Crashzone in ihrer Gesamtheit kann sich dabei durch eine über die Energieverzehrelemente bereitgestellte Eigenschaft, wie insbesondere Steifigkeit und/oder Festigkeit in einem vordefinierten Bereich auszeichnen und dadurch ein Ansprechen bei einer eingeleiteten Stoßkraft vordefinierter Größe ermöglichen.

Die einzelnen Crashzonen I bis IV sind derart ausgelegt und angeordnet, dass diese in einer vordefinierten Abfolge, d.h. vorzugsweise nacheinander oder aber einander überlagernd ansprechen und somit den Wirkungsverlauf des Energieeintrages in das Fahrzeug im Crashfall definieren.

Die Ausführung in Figur 1 stellt eine besonders vorteilhafte Ausbildung mit vier derartigen, dem Überlebensraum V vor- oder nachgeordneten Crashzonen dar. Minimal sind dabei dem Überlebensraum V die Zonen I, III zugeordnet. Bei Ausbildung des Nutzfahrzeuges 2 als Zugfahrzeug für einen Sattelauflieger 7 ist vorzugsweise noch die Crashzone IV vorgesehen, welche zwischen der Sattelkupplung 8 und dem Tragrahmen 4 angeordnet ist. In besonders vorteilhafter Ausbildung ist jedoch dem Überlebensraum V neben der Crashzone I noch zumindest eine weitere Crashzone II vorgeordnet. Dabei werden nacheinander oder zum Teil einander überlagernd die Zonen I, II, III bzw. I, IV, II, III angesprochen, wobei II und III auch zumindest teilweise überlagernd ansprechen können.

In Figur 1 sind dem Überlebensraum V, welcher im Fahrbetrieb dem Aufenthaltsraum des Fahrers entspricht in Fahrzeuglängsrichtung vom Frontbereich ausgehend betrachtet wenigstens eine oder mehrere Energieverzehrelemente vorgeordnet angeordnet, wobei das eine oder die mehreren Energieverzehrelemente in der ersten als Einleitungszone bezeichneten Crashzone I angeordnet sind. Die Funktion dieser Crashzone I besteht im Wesentlichen darin, durch den Erstkontakt die Einleitung und Übertragung der Kräfte in die nachgeordneten Crashzonen zu optimieren und eine hinsichtlich der Richtung und Verteilung der Kräfte optimale Übertragung in nachgeordnete Crashzonen zu ermöglichen. Im Einzelnen werden die in der Einleitungszone angeordneten Energieverzehrelemente von Deformationselementen mit geringer Steifigkeit, insbesondere weichen Deformationskörpern zur definierten Einleitung bzw. Übertragung der von diesen aufgenommenen Stoßkräfte zu nachgeordneten und/oder wirkungsmäßig nachgelagerten Energieverzehrelementen der gleichen oder anderer Crashzonen II bis IV gebildet. Die Energieverzehrelemente dieser Crashzone I sind vorzugsweise als energieverzehrende An- und Aufbaustrukturen ausgebildet. Diese sind vorzugsweise direkt am Tragrahmen 4 angeordnet bzw. an diesem befestigt oder gelagert. Die An- und Aufbaustrukturen sind als dreidimensionale oder flächige Strukturen ausgebildet, beispielsweise in Form von Wabenstrukturen, insbesondere Aluminiumwaben, Hohlkörpern, wie Verformungsrohren, Faserverbundkunststoff-Strukturen und/oder Faserverbundkunststoff-Rohren.

Bei Ausbildung des Nutzfahrzeuges 2 als Zugfahrzeug für einen Sattelauflieger 7 sind die Zonen derart ausgelegt, dass nach Zone I die Crashzone IV anspricht, welche zwischen Sattelkupplung 8 und Tragrahmen 4 angeordnet ist. Diese umfasst zumindest ein Energieverzehrelement in Form eines steifen Deformationselementes unter der am Tragrahmen 4 als Bestandteil der Sattelkupplung 8 gelagerten Sattelplatte 9. Dieses ermöglicht eine gelenkte Deformation mithilfe des Tragrahmens 4. Bezüglich der Ausbildung des oder der in Crashzone IV angeordneten Energieverzehrelemente besteht eine Mehrzahl von Möglichkeiten. Hierbei können einfache Deformationsstrukturen oder aber ganze Systeme, wie hydraulische, gashydraulische, hydrostatische Dämpfungssysteme zum Einsatz gelangen. Beispielhaft einsetzbar sind klassische Verformungsrohre, insbesondere Aufweitungsrohre, die aus Stahl oder Kunststoff ausgebildet sein können. Eine weitere Möglichkeit besteht im Einsatz eines sogenannten Abschälabsorbers, bei welchem um ein rohrförmiges Element, insbesondere Stahlrohr mehrere Schneidelemente angeordnet sind, die beim Durchdrücken eines Rohres durch Schneiden Energie abbauen.

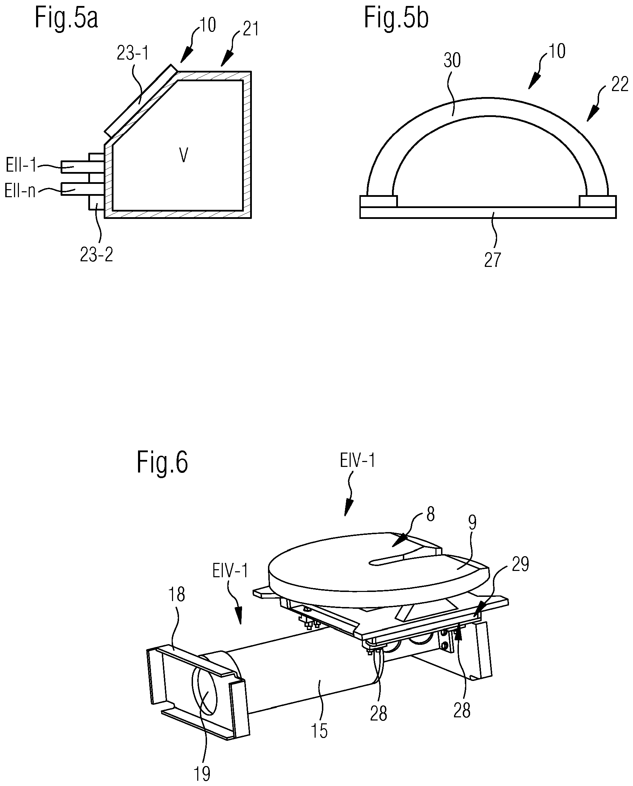

In einer vorteilhaften und besonders einfachen Ausführung umfasst das eine in der Crashzone IV eingesetzte Energieverzehrelement ein Element mit zumindest einem Energieverzehrbereich und ein mit diesem zusammenwirkendes, eine Düse bildendes Gegenelement. Element und Gegenelement wirken derart miteinander zusammen, dass bei Einleitung einer, eine vordefinierte kritische Stoßkraft überschreitenden und in Längsrichtung des Fahrgestells 3 zum vorderen Endbereich 5 ausgerichteten Stoßkraftkomponente in die Sattelkupplung 8 die Stoßkraft in das Element derart eingeleitet wird, dass unter Aufhebung der Verbindung zwischen Sattelkupplung 8 und Tragrahmen 4 dieses durch die Düse gepresst wird. Eine beispielhafte Ausführung eines derartig aufgebauten Energieverzehrelementes wird in Figur 6 detailliert beschrieben.

Weitere zusätzlich oder alterativ verwendbare Energieverzehrelemente sind An- und Aufbaustrukturen sowie weitere Zwischenordnungsstrukturen in Form von wabenartigen Strukturen, Verformungsrohren etc. Für Nutzfahrzeuge, die einen Kofferaufbau, einen Tank, Feuerwehr oder sonstige direkt verbaute Ausrüstungen hat, entfällt diese Zone.

In besonders vorteilhafter Ausbildung ist zwischen dem Überlebensraum V und der Einleitungszone I zumindest eine weitere Crashzone II vorgesehen. Diese umfasst wenigstens ein, vorzugsweise mehrere Energieverzehrelemente in Form von steifen Deformationselementen. Die dieser Zone zugeordneten Energieverzehrelemente sind vorzugsweise derart ausgelegt, dass diese nach den Energieverzehrelementen der Crashzone IV ansprechen, d.h. die eingeleitete Stoßkraft übersteigt die über die Crashzone IV absorbierbare maximale Kraft. Die Zonen I und IV sind vorzugsweise derart ausgelegt, dass beim Ansprechen der Crashzone II bereits von einem Totalschaden des Fahrzeuges ausgegangen werden muss.

Die Crashstruktur der Zone II ist steif ausgeführt. Als Energieverzehrelemente können beispielsweise Faserverbundwerkstoff-Rohre, insbesondere Faserverbundkunststoff-Rohre und/oder Faserbundkunststoff-Strukturen zum Einsatz gelangen. Über diese kann nach erfolgter Ausschöpfung des Energieverzehrs eine Kraft in die verformungssteife, den Überlebensraum V umgebende Rahmenstruktur 10 geleitet werden, die eine Relativbewegung dieser gegenüber dem Tragrahmen 4 unter Zusammenwirken mit den Energieverzehrelementen der Crashzone III auslöst. Die Crashzonen III ist in Analogie zur Crashzone II durch die Anordnung von Energieverzehrelementen in Form steifer Deformationselemente charakterisiert. Crashzone III ist dem Überlebensraum V nachgeordnet und kann beispielsweise in den Bereich der Schlafkabine des Fahrers verlegt sein. Die Crashzone III kann in Längsrichtung des Fahrzeuges betrachtet von beiden Seiten aus angesprochen werden. Zum einen kann die den Überlebensraum V umgebende verformungssteife Rahmenstruktur 10 in die Struktur der Zone III eindringen und zusätzlich Energie verzehren, zum anderen kann die von hinten kommende Ladung bzw. ein Sattelauflieger 7 zusätzlich abgebremst werden, und an dem Vordringen in den Überlebensraum V gehindert werden. Mögliche Ausführungen der Energieverzehrelemente sind auch hier Ausführungen als Faserverbundwerkstoff-Rohre, insbesondere Faserverbundkunststoff-Rohre, Faserverbundwerkstoff-Strukturen und/ oder Aluminiumwaben.

Die Figur 2 zeigt beispielhaft eine mögliche Ausführung eines Kollisionsschutzsystems 1 gemäß Figur 1 mit den Crashzonen I, III und IV. Der Überlebensraum 5 wird hier in Längsrichtung des Fahrzeuges betrachtet von einer verformungssteifen Rahmenstruktur 10 umschlossen. Bei dieser handelt es sich vorzugsweise um eine supersteife Faserverbundwerkstoff-Struktur in Form eines Monocoques.

Um eine Zugängigkeit zur Antriebsmaschine zu gewährleisten, ist die gesamte Fahrerkabine 6 kippbar, weshalb auch die supersteife Rahmenstruktur 10 in Längsrichtung im vorderen Bereich kippbar gelagert ist, d.h. schwenkbar um eine in Breitenrichtung verlaufende Schwenkachse mittels einer entsprechenden Lagerung 11 am Fahrgestell 3, insbesondere am Tragrahmen 4. Die Lagerung kann zumindest mittelbar, vorzugsweise direkt erfolgen. Im in Längsrichtung hinteren Bereich stützt sich das Monocoque über eine weitere Lagerung 12 am Tragrahmen 4 ab.

Erkennbar sind ferner beispielhaft in den einzelnen Crashzonen I, III und IV angeordnete Energieverzehrelemente. Für die als Einleitungszone fungierende Crashzone I sind hier beispielhaft Energieverzehrelemente EI-1 bis EI-n wiedergegeben, die am Tragrahmen 4 angeordnet bzw. befestigt sind und deren Hauptansprechrichtung in Längsrichtung, d.h. X-Richtung ausgerichtet ist. Diese sind somit zwischen Tragrahmen 4 und der das Fahrerhaus umschließenden Karosserie im vorderen Endbereich angeordnet und übernehmen einen Erstkontakt mit dem Hindernis 24. Die Energieverzehrelemente EI-1 bis EI-n sind ausgebildet und ausgelegt, neben der optimierten Verteilung und Einleitung der Stoßkraft in das Fahrgestell 3 eine Stoßkraft vordefinierter Größe zu kompensieren, bis die nächste Crashzone, hier die Crashzone IV anspricht. Nach einem Ansprechen dieser werden die am Monocoque wirksamen Kräfte in Verformungsarbeit in Crashzone III umgesetzt. Aufgrund der Verformungssteifigkeit des Monocoques bleibt dieses in seiner Form unverändert bis zu einer vordefinierten, maximal auf dieses einwirkbaren Kraft bestehen.

Das dargestellte Energieverzehrelement in der Crashzone IV ist mit EIV-1 bezeichnet. Dieses ist wirkungsmäßig zwischen Sattelkupplung 8 und Tragrahmen 4 angeordnet, vorzugsweise stützt sich das Energieverzehrelement EIV-1 direkt an der Sattelkupplung 8 einerseits und dem Tragrahmen 4 andererseits ab.

In der Crashzone III sind eine Mehrzahl von Energieverzehrelementen EIII-1 bis EIII-n vorgesehen. Diese sind vorzugsweise direkt zwischen Überlebensraum V, insbesondere der Außenwandung der verformungssteifen Rahmenstruktur 10 an deren in Längsrichtung des Fahrzeuges in Richtung des vorderen Bereiches weisenden Flächenbereichen und dem Tragrahmen 4, insbesondere einem mit diesem wenigstens mittelbar verbundenen Bauteil an dessen zur verformungssteifen Rahmenstruktur 10 weisenden Flächenbereichen ab. Die einzelnen Energieverzehrelemente EIII-1 bis EIII-n sind hier in vertikaler Richtung mit Versatz zueinander angeordnet. Es versteht sich, dass Energieverzehrelemente auch zusätzlich oder alternativ mit Versatz zueinander in Breitenrichtung angeordnet sein können.

Allen dargestellten Energieverzehrelementen ist gemeinsam, dass deren Hauptwirkungsrichtung in Längsrichtung des Fahrzeuges ausgerichtet ist. Dabei können diese auch geeignet sein, leichte seitliche Kollisionen in einem geringen Winkelbereich ebenfalls durch plastische Verformung oder destruktiven Energieverzehr abzumildern. Modifikationen oder zusätzliche Energieverzehrelemente mit von der Längsrichtung abweichender Hauptrichtung für seitliche Kollisionen sind ebenfalls denkbar.

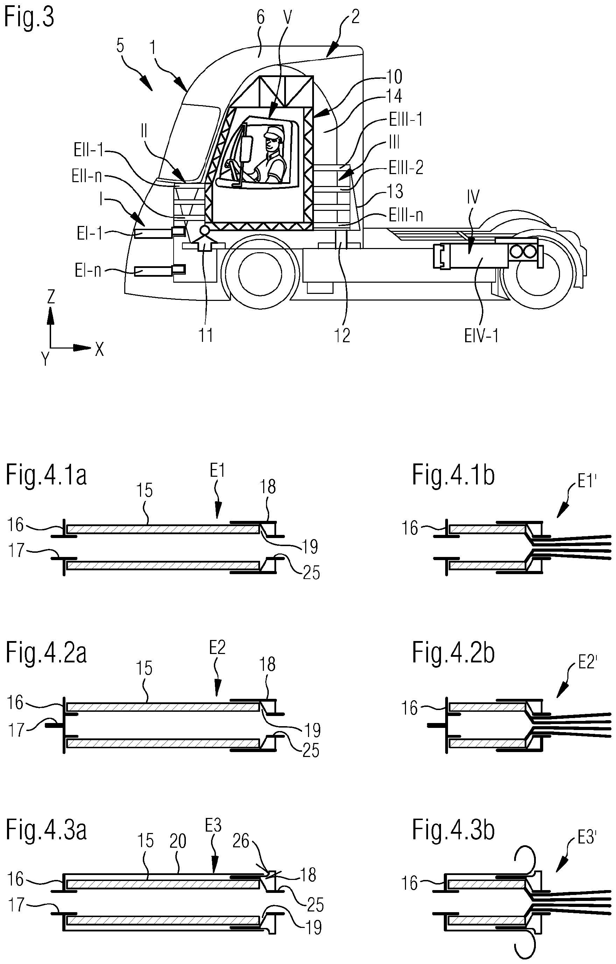

Gegenüber Figur 2 verdeutlicht Figur 3 eine vorteilhafte Weiterbildung mit zusätzlicher Crashzone II zwischen Einleitungszone I und verformungssteifer Rahmenstruktur 10 mit den Energieverzehrelementen EII-1 bis EII-n. Die einzelnen Energieverzehrelemente EII-1 bis EII-n sind hier in vertikaler Richtung mit Versatz zueinander angeordnet und stützen sich vorzugsweise direkt am Tragrahmen 4 oder einem mit diesem verbundenen oder sich direkt an diesem abstützenden Bauteil und den in Fahrzeuglängsrichtung nach vorn weisenden Flächenbereichen der verformungssteifen Rahmenstruktur 10 ab. Es versteht sich, dass Energieverzehrelemente auch zusätzlich oder alternativ mit Versatz zueinander in Breitenrichtung, d.h. Y-Richtung angeordnet sein können.

Die Figuren 4a.1 bis 4a.3 zeigen beispielhaft unterschiedliche Ausbildungen eines Energieverzehrelementes E, hier E1 in Figur 4a.1, E2 in Figur 4a.2 und E3 in Figur 4a.3 im unverformten und unzerstörtem Ausgangszustand. Die Figuren 4b.1 bis 4b.3 zeigen die Energieverzehrelemente E1 bis E3 nach deren Ansprechen, d.h. Umwandlung der durch die eingeleiteten Stoßkräfte eingebrachten Energie in Verformungsenergie. Die Energieverzehrelemente sind dabei alle durch eine Erstreckung entlang einer Längsachse gekennzeichnet. Vorzugsweise sind diese als zylindrische Elemente ausgeführt. Die Anordnung im Fahrzeug erfolgt dann vorzugsweise derart, dass die Längsachse mit der Längsrichtung zusammenfällt.

Die Figuren 4a.1 bis 4a.3 zeigen eine Ausbildung mit Verformungsrohr, welches einen nach einem Ansprechen austauschbaren Energieverzehr bei möglicher Reparatur beschreibt. Der Durchmesser ist vorzugsweise variabel im Bereich von Ø50 mm - Ø300 mm gewählt.

Das einzelne Energieverzehrelement E1 bis E3 umfasst jeweils ein Verformungselement, insbesondere Verformungsrohr 15, welches über ein Krafteinleitungselement 16 beaufschlagbar ist. Das Krafteinleitungselement 16 kann je nach Anordnung des Energieverzehrelementes E1 entweder direkt, insbesondere bei Anordnung in Crashzone I vom Hinderniss oder der Karaosserie oder aber mittelbar, d.h. über den Tragrahmen 4 von diesem beaufschlagt werden. Das Krafteinleitungselement 16 stützt sich bei Anordnung in den Crashzonen II und III vorzugsweise jeweils direkt am Tragrahmen 4 ab.

Das Krafteinleitungselement 16 ist in den Figuren 4a.1 und 4a.3 als ringförmiges Element, vorzugsweise aus Aluminium ausgebildet, in Figur 4a.2 beispielhaft als geschlossene Druckplatte. Dieses bildet zumindest einen Beaufschlagungsbereich für das Verformungsrohr 15, insbesondere einen Flächenbereich, an welchem eine erste Stirnseite des Verformungsrohres 15 zum Anliegen gelangt. Dem Verformungsrohr 15 ist auf der gegenüberliegenden Stirnseite ein Gegenelement 18 zugeordnet, welches eine Düse 19 aufweist, durch die das Verformungsrohr 15 unter Einwirkung des Krafteinleitungselementes 16 gedrückt wird.

In den Ausführungen in den Figuren 4a.1 bis 4a.3 ist das Gegenelement 18 beispielhaft als Düsenflansch, vorzugsweise aus Aluminium/Stahl ausgebildet, das Verformungsrohr 15 vorzugsweise aus Faserverbundwerkstoff, insbesondere Faserverbundkunststoff. Krafteinleitungselement 16 und Gegenelement 18 weisen in vorteilhafter Weise nach außen hin einen Anschlussbereich 17 auf, der in die angrenzende Struktur eingeführt werden kann. Dieser kann beispielhaft als Flansch wie in den Figuren 4a.1 und 4a.3 dargestellt oder Zapfen mit Anschlusseinrichtungen, wie in Figur 4a.2 wiedergegeben, ausgebildet sein. Da Nutzfahrzeuge auch in größeren Segmenten vormontiert und erst in der Endmontage zusammengestellt werden, kann das Energieverzehrelement dann sicher montiert werden. Auch der am Gegenelement 18 vorgesehene hintere Anschlussbereich 25, welcher vorzugsweise als Flansch ausgebildet ist, weist vorzugsweise Anschlusseinrichtungen zum Anschluss an ein mit diesem zusammenwirkendes Bauteil, beispielsweise in Form eines Rohrgewindes auf. Das Energieverzehrelement kann dann beispielsweise mit einer Muffe an die angrenzende Struktur geschraubt werden.

Durch verschiedene Durchmesser kann das Energieverzehrelement verdrehsicher bei der Montage eingesetzt werden.

In den Figuren 4a.1 und 4a.3 sind Krafteinleitungselement 16 und Gegenelement 18 beispielhaft als offene Rundkörper ausgebildet und bilden verklebt mit dem Verformungsrohr 15 einen Rohrkörper. Das Energieverzehrelement E2 gemäß Figur 4a.2 unterscheidet sich von der Ausführung gemäß Figur 4a.2 dadurch, dass die als Krafteinleitungselement 16 fungierende vordere Druckplatte geschlossen ausgebildet ist.

Gegenüber der Ausbildung des Energieverzehrelementes E1 weist das Energieverzehrelement E3 in Figur 4a.3 desweiteren eine äußere Hülse 20 auf. Diese umschließt das Verformungsrohr 15 in Umfangsrichtung und ist vorzugsweise aus Stahl/Aluminium gebildet, was aus Korrosionsschutzgründen sowie für die Absorption zusätzlicher dynamischer Zug- und Drucklasten vorteilhaft sein kann. Die Hülse 20 stützt sich dabei beidseitig zwischen Krafteinleitungselement 16 und Gegenelement 18 angeordnet an diesen ab. Verformungsrohr 15 und Hülse 20 sind unterschiedliche Beaufschlagungsbereiche am Gegenelement 18 zugeordnet, vorzugsweise dem Verformungsrohr 15 ein Flächenbereich am Innenumfang und der Hülse 20 ein Flächenbereich am Außenumfang des Gegenelementes 18. Das Krafteinleitungselement 16, insbesondere der vordere Druckteller leitet im Crashfall die Kräfte in das Verformungsrohr 16 und in die Hülse 20. Das Verformungsrohr 15 wird nach innen zerfasert und die Hülse 20 wird am Gegenelement 18 über eine konvexe Fläche 26 am Außenumfang nach außen aufgeweitet. Die Hülse 20 reißt geführt auf und zwirbelt sich an der konvexen Fläche 26 auf. Die Hülse 20 kann zusätzliche Energieverzehrfunktion haben, muss aber nicht.

Die Figuren 5a und 5b zeigen beispielhaft mögliche Ausbildungen einer verformungssteifen Rahmenstruktur 10. Figur 5a zeigt eine Ausbildung als Monocoque 21, während Figur 5b ein Beispiel einer Ausbildung als in Längsrichtung verformungssteife Struktur 22 wiedergibt. Letztere umfasst zwei bügelartige Träger 30 nach Art einer A-Säule, die in Breitenrichtung beabstandet zueinander angeordnet sind und vorzugsweise sowohl über eine Bodenstruktur 27 als auch eine Dachstruktur und/oder Querträger miteinander verbunden sind und somit den Überlebensraum V beschreiben.

In Figur 5a ist desweiteren die Anordnung von Energieverzehrelementen, welche als An- und Aufbaustrukturen an der verformungssteifen Rahmenstruktur 10, insbesondere den Außenwänden des Monocoques 21 angeordnet sind, d.h. Strukturen frei von einer Abstützung an einem Endbereich beispielhaft wiedergegeben. Diese Strukturen sind hier mit 23-1, 23-2 bezeichnet.

Die Monocoquestruktur 21 kann weiterhin mit aktiven Systemen wie ein Airbag ausgerüstet werden um die Negativbeschleunigung weiter abzumildern. Die Struktur kann in einer nicht dargestellten Weiterbildung so ausgeführt sein, das zwei separate Zellen für Fahrer und Beifahrer entstehen. Der dabei entstehende Mitteltunnel kann als Steifigkeitserhöhung genutzt werden und als Trennlinie der zwei Zellen fungieren.

Figur 6 zeigt in einer Perspektivansicht beispielhaft den Aufbau eines Energieverzehrelementes EIV-1. Diese umfasst dazu zumindest ein Verformungsrohr 15 und ein mit diesem derart zusammenwirkendes, eine Düse bildendes Gegenelement 18, dass bei Einleitung einer eine vordefinierte kritische Stoßkraft überschreitenden und in Längsrichtung des Fahrgestells 3 zum vorderen Endbereich 5 ausgerichteten Stoßkraftkomponente in die Sattelkupplung 8 die dieses mit der Sattelplatte 9 wenigstens mittelbar verbindenden Abscherelemente 28 unter Aufhebung der Verbindung zwischen Sattelkupplung 8, insbesondere einer mit dieser verbundenen bzw. diese abstützenden Trageinheit 29 und dem Tragrahmen 4 ansprechen und die Stoßkraft in das Verformungsrohr 15 derart eingeleitet wird, dass dieses durch das Gegenelement 18, insbesondere die von diesem gebildete Düse 19 gepresst wird.

### Bezugszeichenliste

- 1: Kollisionsschutzsystem
- 2: Nutzfahrzeug
- 3: Fahrgestell
- 4: Tragrahmen
- 5: vorderer Endbereich
- 6: Fahrerkabine
- 7: Auflieger
- 8: Sattelkupplung
- 9: Sattelplatte
- 10: verformungssteife Rahmenstruktur
- 11: Lagerung
- 12: Lagerung
- 13: mit Tragrahmen verbundenes Bauteil
- 14: Schlafkabine
- 15: Verformungsrohr
- 16: Krafteinleitungselement
- 17: Anschlussbereich
- 18: Gegenelement
- 19: Düse
- 20: Hülse
- 21: Monocoque
- 22: in Längsrichtung verformungssteife Struktur
- 23-1, 23-2: An- und Aufbaustrukturen
- 24: Hindernis
- 25: Anschlussbereich
- 26: konvexe Fläche
- 27: Bodenstruktur
- 28: Abscherelement
- 29: Trageinheit
- 30: Träger
- I, II,: Crashzonen
- III, IV V: Überlebensbereich
- E1, E2, E3: Energieverzehrelement
- EI-1, EI-n: Energieverzehrelement Crashzone I
- EII-1, EII-n: Energieverzehrelement Crashzone II
- EIII-1, EIII-n: Energieverzehrelement Crashzone III
- EIV-1: Energieverzehrelement Crashzone IV

## Patentansprüche

1. Kollisionsschutzsystem (1) für Nutzfahrzeuge (2) mit einem sich in Längsrichtung des Fahrzeuges erstreckenden Fahrgestell (3) mit einem Tragrahmen (4) und einer in Längsrichtung des Fahrgestells (3) betrachtet am vorderen Endbereich (5) des Tragrahmens (3) im Frontbereich des Fahrzeuges angeordneten Fahrerkabine (6);
wobei dieses eine Vielzahl von zumindest im Bereich der Erstreckung der Fahrerkabine (6) angeordneten Energieverzehrelementen (EI-1 bis EI-n, EII-1 bis EII-n, EIII-1 bis EIII-n, EIV-1; E1, E2, E3) umfasst, die ausgelegt und angeordnet sind, in einem Kollisionsfall in Abhängigkeit der Größe einer in das Fahrzeug (2) eingeleiteten Stoßkraft in vordefinierter Abfolge durch zumindest teilweise irreversible Verformung und/oder zumindest teilweise Zerstörung anzusprechen
**dadurch gekennzeichnet,**
**dass** in der Fahrerkabine (6) ein als Überlebensraum (V) definierter Bereich zum Aufenthalt des Fahrers während eines Kollisionsfalls vorgesehen ist und die einzelnen Energieverzehrelemente (EI-1 bis EI-n, EII-1 bis EII-n, EIII-1 bis EIII-n, EIV-1, E1, E2, E3) außerhalb des Überlebensraumes (V) angeordnet sind; wobei der den Überlebensraum (V) definierende Bereich von einer verformungssteifen Rahmenstruktur (10) umgeben ist, wobei diese von einem Monocoque (21) oder einer selbsttragenden in Längsrichtung des Fahrzeuges betrachtet verformungssteifen Rahmenstruktur (22) gebildet wird und die verformungssteife Rahmenstruktur (10) vorzugsweise kippbar am Tragrahmen (4) gelagert ist;
**dass** jeweils ein oder mehrere Energieverzehrelemente (EI-1 bis EI-n, EII-1 bis EII-n, EIII-1 bis EIII-n, EIV-1, E1, E2, E3) in Crashzonen (I, II, III, IV) definierenden räumlichen Bereichen am Fahrzeug (2) angeordnet sind, wobei die jeweils einer derartigen Crashzone (I, II, III, IV) zugeordneten Energieverzehrelemente (EI-1 bis EI-n, EII-1 bis EII-n, EIII-1 bis EIII-n, EIV-1, E1, E2, E3) durch vordefinierte Eigenschaften, insbesondere eine vordefinierte Steifigkeit und/oder Festigkeit, vorzugsweise innerhalb eines vordefinierten Bereiches charakterisiert sind, wobei
- in Fahrzeuglängsrichtung vom vorderen Endbereich (5) ausgehend betrachtet dem Überlebensraum (V) wenigstens eine oder mehrere Energieverzehrelemente (EI-1 bis EI-n, EII-1 bis EII-n, E1, E2, E3) in Längsrichtung des Fahrzeuges betrachtet vorgeordnet angeordnet sind, wobei ein oder mehrere Energieverzehrelemente (EI-1 bis EI-n, E1, E2, E3) in einer ersten als Einleitungszone bezeichneten Crashzone (I) angeordnet sind;
- in Fahrzeuglängsrichtung vom vorderen Endbereich (5) ausgehend ein oder mehrere Energieverzehrelemente (EII-1 bis EII-n) in zumindest einer weiteren zwischen der Einleitungszone (I) und dem Überlebensraum (V) angeordneten Crashzone (II) angeordnet sind;
- **dass** in Fahrzeuglängsrichtung vom vorderen Endbereich (5) ausgehend betrachtet dem Überlebensraum (V) wenigstens zwei oder mehrere Energieverzehrelemente (EIII-1 bis EIII-n, EIV-1) in Längsrichtung des Fahrzeuges (2) betrachtet nachgeordnet angeordnet sind.

2. Kollisionsschutzsystem (1) nach einem der vorgenannten Ansprüche,
**dadurch gekennzeichnet,**
**dass** das einzelne Energieverzehrelement (EI-1 bis EI-n, EII-1 bis EII-n, EIII-1 bis EIII-n, EIV-1, E1, E2, E3) derart ausgelegt und angeordnet ist eine Stoßkraft mit Hauptrichtungskomponente in Längsrichtung des Fahrzeuges (2), bevorzugt eine vollständig in Längsrichtung ausgerichtete Stoßkraft durch zumindest teilweise irreversible Verformung und/oder zumindest teilweise Zerstörung aufzunehmen.

3. Kollisionsschutzsystem (1) nach einem der vorgenannten Ansprüche,
**dadurch gekennzeichnet,**
**dass** das einzelne Energieverzehrelement (EI-1 bis EI-n, EII-1 bis EII-n, EIII-1 bis EIII-n, EIV-1, E1, E2, E3) sich wenigstens mittelbar am Tragrahmen oder einem mit diesem gekoppelten Bauteil abstützend angeordnet ist.

4. Kollisionsschutzsystem (1) nach Anspruch !,
**dadurch gekennzeichnet,**
**dass** die einzelnen Energieverzehrelemente (EI-1 bis EI-n, EII-1 bis EII-n, EIII-1 bis EIII-n, EIV-1, E1, E2, E3) innerhalb einer einzelnen Crashzone (I, II, III, IV) derart angeordnet und ausgebildet sind, unter Einwirkung einer Stoßkraft gleichzeitig oder zumindest teilweise einander überlagernd anzusprechen.

5. Kollisionsschutzsystem (1) nach einem der Ansprüche 1 bis 4,
**dadurch gekennzeichnet,**
**dass** die Energieverzehrelemente (EI-1 bis EI-n, EII-1 bis EII-n, EIII-1 bis EIII-n, EIV-1, E1, E2, E3) derart ausgebildet und angeordnet sind, dass jeweils die einer Crashzone (I, II, III, IV) zugeordneten Energieverzehrelemente (EI-1 bis EI-n, EII-1 bis EII-n, EIII-1 bis EIII-n, EIV-1, E1, E2, E3) gemäß einer der nachfolgenden Möglichkeiten ansprechen:
- vor oder nach dem Ansprechen der Energieverzehrelementen (EI-1 bis EI-n, EII-1 bis EII-n, EIII-1 bis EIII-n, EIV-1, E1, E2, E3) einer anderen Crashzone (I, II, III, IV),
- zumindest teilweise überlagert zum Ansprechen der Energieverzehrelemente (EI-1 bis EI-n, EII-1 bis EII-n, EIII-1 bis EIII-n, EIV-1, E1, E2, E3) einer anderen Crashzone (I, II, III, IV).

6. Kollisionsschutzsystem (1) nach einem der Ansprüche 1 bis 5,
**dadurch gekennzeichnet,**
**dass** die in der Einleitungszone (I) angeordneten Energieverzehrelemente (EI-1 bis EI-n) von Deformationselementen mit geringer Steifigkeit, insbesondere weichen Deformationskörpern zum definierten Einleiten bzw. Übertragen der von diesen aufgenommenen Stoßkräfte zu nachgeordneten und/oder wirkungsmäßig nachgelagerten Energieverzehrelementen (EII-1 bis EII-n, EIII-1 bis EIII-n, EIV-1, E1, E2, E3) der gleichen oder anderer Crashzonen (II, III, IV), wobei die Energieverzehrelemente (EI-1 bis EI-n) der Einleitungszone (I) von am vorderen Endbereich (5) des Tragahmens (4) angeordneten Strukturen gebildet werden, insbesondere sich einseitig an diesen abstützenden An- und Aufbaustrukturen in Form von Wabenstrukturen, Verformungsrohren, Faserverbundwerkstoff-Strukturen

7. Kollisionsschutzsystem (1) nach einem der Ansprüche 1 bis 6,
**dadurch gekennzeichnet,**
**dass** die ein oder mehreren Energieverzehrelemente (EII-1 bis EII-n) der zwischen der Einleitungszone (I) und dem Überlebensraum (V) angeordneten Crashzone (II) direkt zwischen Tragrahmen (4) und Überlebensraum (V) angeordnet sind.

8. Kollisionsschutzsystem (1) nacheinem der Ansprüche 1 bis 7,
**dadurch gekennzeichnet,**
**dass** die ein oder mehreren, in Längsrichtung dem Überlebensraum (V) nachgeordnet angeordneten Energieverzehrelemente (EIII-1 bis EIII-n, EIV-1, E1, E2, E3) direkt zwischen Tragrahmen (4) und Überlebensraum (V) angeordnet sind.

9. Kollisionsschutzsystem (1) nach einem der Ansprüche 1 bis 8,
**dadurch gekennzeichnet,**
**dass** die Energieverzehrelemente (EII-1 bis EII-n, EIII-1 bis EIII-n, EIV-1, E1, E2, E3) der zwischen Einleitungszone (I) und Überlebensraum (V) angeordneten Crashzone (II, III, IV) und der dem Überlebensraum (V) nachgeordneten Crashzone durch eine hohe Deformationssteifigkeit charakterisiert sind.

10. Kollisionsschutzsystem (1) nach einem der vorgenannten Ansprüche;
**dadurch gekennzeichnet,**
**dass** das Fahrzeug als Zugfahrzeug mit einer am Tragrahmen (4) gelagerten Sattelkupplung (8) mit einer Sattelplatte (9), die mit einer Kupplung am Sattelauflieger (7) verbindbar ist, ausgebildet ist, und die Sattelkupplung (8) wenigstens mittelbar mit dem Tragrahmen (4) verbunden ist, wobei zwischen der Sattelkupplung (8) und dem Tragrahmen (4) ein bei Einleitung einer, eine vordefinierte kritische Stoßkraft überschreitenden und in Längsrichtung des Fahrgestells (3) zum vorderen Endbereich (5) ausgerichteten Stoßkraftkomponente in die Sattelkupplung (8) ansprechendes Energieverzehrelement (EIV-1) vorgesehen ist.

11. Kollisionsschutzsystem (1) nach einem der vorgenannten Ansprüche;
**dadurch gekennzeichnet,**
**dass** das einzelne Energieverzehrelement (EI-1 bis EI-n, EII-1 bis EII-n, EIII-1 bis EIII-n, EIV-1, E1, E2, E3) als Element ausgewählt aus der nachfolgenden Gruppe von Elementen ausgebildet ist:
a) Einrichtungen zur zumindest mittelbaren Abstützung zwischen Überlebensraum (V) und Tragrahmen (4), insbesondere
- eine Verformungsstruktur, insbesondere räumlicher Körper, vorzugsweise Verformungsrohr (15)
- eine Einrichtung mit einem, wenigstens einen Energieverzehrbereich aufweisenden Element, vorzugsweise einem als zylindrischer Körper oder Hohlkörper ausgebildeten Element (15) und ein mit diesem unter Krafteinwirkung zusammenwirkendes, eine Düse (19) bildendes Gegenelement (18) umfasst, derart dass bei Einleitung einer eine vordefinierte kritische Stoßkraft überschreitenden und in Längsrichtung des Fahrgestells zum vorderen Endbereich (5) ausgerichteten Stoßkraftkomponente die Stoßkraft in das Element derart eingeleitet wird, dass dieses durch das Gegenelement (18) unter destruktiver Verformung gepresst wird;
b) eine An- oder Aufbaustruktur, welche jeweils
- am Überlebensraum (V) oder einer diesem umgebenden verformungssteifen Rahmenstruktur (10)
- Tragrahmen (4) oder
- einem anderen Energieverzehrelement (EI-1 bis EI-n, EII-1 bis EII-n, EIII-1 bis EIII-n, EIV-1, E1, E2, E3)
sich abstützend angeordnet ist.

## Claims

1. Collision protection system (1) for utility vehicles (2) having a chassis (3) extending in the longitudinal direction of the vehicle with a supporting frame (4) and a driver's cab (6) arranged at the front end region (5) of the supporting frame (3) in the front region of the vehicle, as viewed in the longitudinal direction of the chassis (3), wherein said collision protection system comprises a multiplicity of energy-absorbing elements (EI-1 to EI-n, EII-1 to EII-n, EIII-1 to EIII-n, EIV-1; E1, E2, E3) which are configured and arranged so as to respond, in the event of a collision, by at least partially being irreversibly deformed and/or at least partially being destroyed in a defined sequence depending on the magnitude of an impact force introduced into the vehicle (2),
**characterized**
**in that** a region which is defined as a survival space (V) in which the driver stays during a collision is provided in the driver's cab (6), and the individual energy-absorbing elements (EI-1 to EI-n, EII-1 to EII-n, EIII-1 to EIII-n, EIV-1; E1, E2, E3) are arranged outside the survival space (V), wherein the region defining the survival space (V) is surrounded by a deformation-resistant frame structure (10), wherein the latter is formed by a monocoque (21) or a deformation-resistant frame structure (22) which is self-supporting, as viewed in the longitudinal direction of the vehicle, and the deformation-resistant frame structure (10) is mounted preferably tiltably on the supporting frame (4) ;
**in that** in each case one or more energy-absorbing elements (EI-1 to EI-n, EII-1 to EII-n, EIII-1 to EIII-n, EIV-1; E1, E2, E3) are arranged on the vehicle (2) in spatial regions defining crash zones (I, II, III, IV), wherein the energy-absorbing elements (EI-1 to EI-n, EII-1 to EII-n, EIII-1 to EIII-n, EIV-1; E1, E2, E3) assigned in each case to such a crash zone (I, II, III, IV) are **characterized by** predefined properties, in particular a predefined rigidity and/or strength, preferably within a predefined region, wherein
- as viewed in the vehicle longitudinal direction starting from the front end region (5), at least one or more energy-absorbing elements (EI-1 to EI-n, EII-1 to EII-n, E1, E2, E3) are arranged upstream of the survival space (V), as viewed in the longitudinal direction of the vehicle, wherein one or more energy-absorbing elements (EI-1 to EI-n, E1, E2, E3) are arranged in a first crash zone (1), which is referred to as an introduction zone;
- in the vehicle longitudinal direction starting from the front end region (5), one or more energy-absorbing elements (EII2-1 to EII2-n) are arranged in at least one further crash zone (II) arranged between the introduction zone (I) and the survival space (V);
- in that, as viewed in the vehicle longitudinal direction starting from the front end region (5), at least two or more energy-absorbing elements (EIII-1 to EIII-n, EIV-1) are arranged downstream of the survival space (V), as viewed in the longitudinal direction of the vehicle (2).

2. Collision protection system (1) according to one of the preceding claims,
**characterized**
**in that** the individual energy-absorbing element (EI-1 to EI-n, EII-1 to EII-n, EIII-1 to EIII-n, EIV-1; E1, E2, E3) is configured and arranged in such a manner as to absorb an impact force with a main direction component in the longitudinal direction of the vehicle (2), preferably an impact force oriented completely in the longitudinal direction, by at least partially being irreversibly deformed and/or at least partially being destroyed.

3. Collision protection system (1) according to either of the preceding claims,
**characterized**
**in that** the individual energy-absorbing element (EI-1 to EI-n, EII-1 to EII-n, EIII-1 to EIII-n, EIV-1; E1, E2, E3) is arranged supported at least indirectly on the supporting frame or on a component coupled thereto.

4. Collision protection system (1) according to Claim 1,
**characterized**
**in that** the individual energy-absorbing elements (EI-1 to EI-n, EII-1 to EII-n, EIII-1 to EIII-n, EIV-1; E1, E2, E3) are arranged and formed within an individual crash zone (I, II, III, IV) in such a manner as to respond simultaneously or at least partially superimposed on one another under the action of an impact force.

5. Collision protection system (1) according to one of Claims 1 to 4,
**characterized**
**in that** the energy-absorbing elements (EI-1 to EI-n, EII-1 to EII-n, EIII-1 to EIII-n, EIV-1; E1, E2, E3) are designed and arranged in such a manner that in each case the energy-absorbing elements (EI-1 to EI-n, EII-1 to EII-n, EIII-1 to EIII-n, EIV-1; E1, E2, E3) assigned to a crash zone (I, II, III, IV) respond in accordance with one of the following possibilities:
- before or after the energy-absorbing elements (EI-1 to EI-n, EII-1 to EII-n, EIII-1 to EIII-n, EIV-1; E1, E2, E3) of a different crash zone (I, II, III, IV) respond,
- at least partially superimposed on the response of the energy-absorbing elements (EI-1 to EI-n, EII-1 to EII-n, EIII-1 to EIII-n, EIV-1; E1, E2, E3) of a different crash zone (I, II, III, IV).

6. Collision protection system (1) according to one of Claims 1 to 5,
**characterized**
**in that** the energy-absorbing elements (EI-1 to EI-n) arranged in the introduction zone (I) are formed by deformation elements of low rigidity, in particular soft deformation bodies for the defined introduction or transmission of the impact forces absorbed by them to energy-absorbing elements (EII-1 to EII-n, EIII-1 to EIII-n, EIV-1; E1, E2, E3), which are arranged downstream and/or are mounted downstream in terms of effect, of the same or different crash zones (II, III, IV), wherein the energy-absorbing elements (EI-1 to EI-n) of the introduction zone (I) are formed by structures arranged at the front end region (5) of the supporting frame (4), in particular add-on and assembly structures supported on one side on said structures in the form of honeycomb structures, deformation tubes, fibre composite material structures.

7. Collision protection system (1) according to one of Claims 1 to 6,
**characterized**
**in that** the one or more energy-absorbing elements (EII-1 to EII-n) of the crash zone (II) arranged between the introduction zone (I) and the survival space (V) are arranged directly between the supporting frame (4) and the survival space (V).

8. Collision protection system (1) according to one of Claims 1 to 7,
**characterized**
**in that** the one or more energy-absorbing elements (EIII-1 to EIII-n, EIV-1; E1, E2, E3) arranged downstream of the survival space (V) in the longitudinal direction are arranged directly between the supporting frame (4) and the survival space (V).

9. Collision protection system (1) according to one of Claims 1 to 8,
**characterized**
**in that** the energy-absorbing elements (EII-1 to EII-n, EIII-1 to EIII-n, EIV-1; E1, E2, E3) of the crash zone (II, III, IV) arranged between the introduction zone (I) and the survival space (V) and of the crash zone arranged downstream of the survival space (V) are **characterized by** high rigidity against deformation.

10. Collision protection system (1) according to one of the preceding claims,
**characterized**
**in that** the vehicle is designed in the form of a tractor vehicle having a fifth-wheel coupling (8) which is mounted on the supporting frame (4) and has a fifth-wheel plate (9), which is connectable to the semitrailer (7) by a coupling, and the fifth-wheel coupling (8) is connected at least indirectly to the supporting frame (4), wherein an energy-absorbing element (EIV-1), which responds when an impact force component exceeding a predefined critical impact force and oriented with respect to the front end region (5) in the longitudinal direction of the chassis (3) is introduced into the fifth-wheel coupling (8), is provided between the fifth-wheel coupling (8) and the supporting frame (4).

11. Collision protection system (1) according to one of the preceding claims,
**characterized**
**in that** the individual energy-absorbing element (EI-1 to EI-n, EII-1 to EII-n, EIII-1 to EIII-n, EIV-1; E1, E2, E3) is an element selected from the following group of elements:
a) devices for at least indirect support between the survival space (V) and the supporting frame (4), in particular
- a deformation structure, in particular a three-dimensional body, preferably a deformation tube (15),
- a device with an element having at least one energy-absorbing region, preferably with an element (15) designed as a cylindrical body or hollow body, and comprising a counter element (18) which interacts with said element (15) under the action of force and forms a nozzle (19) such that, when an impact force component exceeding a predefined critical impact force and oriented with respect to the front end region (5) in the longitudinal direction of the chassis is introduced, the impact force is introduced into the element in such a manner that the latter is pressed by the counter element (18) with destructive deformation;
b) an add-on or assembly structure which is in each case arranged supported
- on the survival space (V) or on a deformation-resistant frame structure (10) surrounding the latter,
- on the supporting frame (4), or
- on another energy-absorbing element (EI-1 to EI-n, EII-1 to EII-n, EIII-1 to EIII-n, EIV-1; E1, E2, E3).

## Revendications

1. Système anticollision (1) pour véhicules utilitaires (2), comprenant un châssis (3) s'étendant dans le sens longitudinal du véhicule et doté d'un cadre porteur (4) et d'une cabine de conducteur (6) disposée, vue dans le sens longitudinal du châssis (3), dans la zone d'extrémité avant (5) du cadre porteur (3), dans la partie avant du véhicule ;
ledit châssis comprenant une pluralité d'éléments d'absorption d'énergie (EI-1 à EI-n, EII-1 à EII-n, EIII-1 à EIII-n, EIV-1 ; E1, E2, E3) disposés au moins au niveau de l'étendue de la cabine de conducteur (6), qui sont conçus et disposés pour réagir en cas de collision en fonction de la grandeur d'une force d'impact appliquée au véhicule (2) dans une séquence prédéfinie par une déformation au moins partiellement irréversible et/ou une destruction au moins partielle,
**caractérisé**
**en ce que** dans la cabine de conducteur (6) est prévue une zone définie comme espace de survie (V), destinée au séjour du conducteur pendant un cas de collision, et les éléments d'absorption d'énergie (EI-1 à EI-n, EII-1 à EII-n, EIII-1 à EIII-n, EIV-1, E1, E2, E3) individuels sont disposés à l'extérieur de l'espace de survie (V) ; la zone définissant l'espace de survie (V) étant entourée par une structure de cadre (10) résistante à la déformation, ladite zone étant formée par un élément monocoque (21) ou une structure de cadre autoporteuse (22) résistante à la déformation, vue dans le sens longitudinal du véhicule, et la structure de cadre (10) résistante à la déformation étant de préférence montée basculante sur le cadre porteur (4) ;
**en ce que** respectivement un ou plusieurs éléments d'absorption d'énergie (EI-1 à EI-n, EII-1 à EII-n, EIII-1 à EIII-n, EIV-1, E1, E2, E3) sont disposés dans des zones spatiales définissant des zones de choc (I, II, III, IV) sur le véhicule (2), les éléments d'absorption d'énergie (EI-1 à EI-n, EII-1 à EII-n, EIII-1 à EIII-n, EIV-1, E1, E2, E3) associés respectivement à une telle zone de choc (I, II, III, IV) étant **caractérisés par** des propriétés prédéfinies, en particulier une rigidité et/ou une solidité prédéfinie(s), de préférence à l'intérieur d'une zone prédéfinie, dans lequel
- dans le sens longitudinal du véhicule, vu en partant de la zone d'extrémité avant (5), au moins un ou plusieurs des éléments d'absorption d'énergie (EI-1 à EI-n, EII-1 à EII-n, E1, E2, E3) sont disposés en amont de l'espace de survie (V), vus dans le sens longitudinal du véhicule, un ou plusieurs éléments d'absorption d'énergie (EI-1 à EI-n, E1, E2, E3) étant disposés dans une première zone de choc (I) appelée zone d'application ;
- dans le sens longitudinal du véhicule, en partant de la zone d'extrémité avant (5), un ou plusieurs éléments d'absorption d'énergie (EII-1 à EII-n) sont disposés dans au moins une autre zone de choc (II) disposée entre la zone d'application (I) et l'espace de survie (V) ;
- en ce que dans le sens longitudinal du véhicule, vu en partant de la zone d'extrémité avant (5), au moins deux ou plusieurs éléments d'absorption d'énergie (EIII-1 à EIII-n, EIV-1) sont disposés en aval de l'espace de survie (V), vus dans le sens longitudinal du véhicule (2).

2. Système anticollision (1) selon l'une quelconque des revendications précédentes, **caractérisé en ce que** l'élément d'absorption d'énergie (EI-1 à EI-n, EII-1 à EII-n, EIII-1 à EIII-n, EIV-1, E1, E2, E3) individuel est conçu et disposé de telle sorte qu'il absorbe une force d'impact ayant une composante directionnelle principale dans le sens longitudinal du véhicule (2), de préférence qu'il absorbe une force d'impact orientée entièrement dans le sens longitudinal par une déformation au moins partiellement irréversible et/ou une destruction au moins partielle.

3. Système anticollision (1) selon l'une quelconque des revendications précédentes, **caractérisé en ce que** l'élément d'absorption d'énergie (EI-1 à EI-n, EII-1 à EII-n, EIII-1 à EIII-n, EIV-1, E1, E2, E3) individuel est disposé en prenant appui au moins indirectement sur le cadre porteur ou sur un composant accouplé à celui-ci.

4. Système anticollision (1) selon la revendication 1, **caractérisé en ce que** les éléments d'absorption d'énergie (EI-1 à EI-n, EII-1 à EII-n, EIII-1 à EIII-n, EIV-1, E1, E2, E3) individuels sont disposés et réalisés à l'intérieur d'une seule zone de choc (I, II, III, IV) de telle sorte que sous l'effet d'une force d'impact ils réagissent simultanément ou du moins avec un chevauchement mutuel partiel.

5. Système anticollision (1) selon l'une quelconque des revendications 1 à 4, **caractérisé en ce que** les éléments d'absorption d'énergie (EI-1 à EI-n, EII-1 à EII-n, EIII-1 à EIII-n, EIV-1, E1, E2, E3) sont réalisés et disposés de telle sorte que respectivement les éléments d'absorption d'énergie (EI-1 à EI-n, EII-1 à EII-n, EIII-1 à EIII-n, EIV-1, E1, E2, E3) associés à une zone de choc (I, II, III, IV) réagissent selon l'une des possibilités suivantes :
- avant ou après la réaction des éléments d'absorption d'énergie (EI-1 à EI-n, EII-1 à EII-n, EIII-1 à EIII-n, EIV-1, E1, E2, E3) d'une autre zone de choc (I, II, III, IV),
- au moins en chevauchement partiel avec la réaction des éléments d'absorption d'énergie (EI-1 à EI-n, EII-1 à EII-n, EIII-1 à EIII-n, EIV-1, E1, E2, E3) d'une autre zone de choc (I, II, III, IV).

6. Système anticollision (1) selon l'une quelconque des revendications 1 à 5, **caractérisé en ce que** les éléments d'absorption d'énergie (EI-1 à EI-n), disposés dans la zone d'application (I), d'éléments de déformation à faible rigidité, en particulier de corps de déformation souples, pour une application ou une transmission définie des forces d'impact absorbées par ceux-ci, sont formés en éléments d'absorption d'énergie (EII-1 à EII-n, EIII-1 à EIII-n, EIV-1, E1, E2, E3) placés en aval et/ou situés en aval de manière fonctionnelle de la même ou d'autres zones de choc (II, III, IV), les éléments d'absorption d'énergie (EI-1 à EI-n) de la zone d'application (I) étant formés par des structures disposées au niveau de la zone d'extrémité avant (5) du cadre porteur (4), en particulier par des structures rapportées et des superstructures prenant appui d'un côté sur ceux-ci, sous la forme de structures alvéolées, de tubes déformables, de structures en matériau composite renforcé par des fibres.

7. Système anticollision (1) selon l'une quelconque des revendications 1 à 6, **caractérisé en ce que** les un ou plusieurs éléments d'absorption d'énergie (EII-1 à EII-n) de la zone de choc (II) disposée entre la zone d'application (I) et l'espace de survie (V) sont disposés directement entre le cadre porteur (4) et l'espace de survie (V).

8. Système anticollision (1) selon l'une quelconque des revendications 1 à 7, **caractérisé en ce que** les un ou plusieurs éléments d'absorption d'énergie (EIII-1 à EIII-n, EIV-1, E1, E2, E3), disposés en aval de l'espace de survie (V) dans le sens longitudinal, sont disposés directement entre le cadre porteur (4) et l'espace de survie (V).

9. Système anticollision (1) selon l'une quelconque des revendications 1 à 8, **caractérisé en ce que** les éléments d'absorption d'énergie (EII-1 à EII-n, EIII-1 à EIII-n, EIV-1, E1, E2, E3) de la zone de choc (II, III, IV), disposée entre la zone d'application (I) et l'espace de survie (V), et la zone de choc en aval de l'espace de survie (V) sont **caractérisées par** une haute résistance à la déformation.

10. Système anticollision (1) selon l'une quelconque des revendications précédentes, **caractérisé en ce que** le véhicule est réalisé sous la forme d'un véhicule tracteur doté d'une sellette d'attelage (8) montée sur le cadre porteur (4) et dotée d'une sellette (9) qui peut être reliée à un accouplement sur la semi-remorque (7), et la sellette d'attelage (8) est reliée au moins indirectement au cadre porteur (4), dans lequel, entre la sellette d'attelage (8) et le cadre porteur (4) est prévu un élément d'absorption d'énergie (EIV-1) réagissant en cas d'application dans la sellette d'attelage (8) d'une composante de force d'impact qui dépasse une force d'impact critique prédéfinie et est orientée dans le sens longitudinal du châssis (3) vers la zone d'extrémité avant (5).

11. Système anticollision (1) selon l'une quelconque des revendications précédentes, **caractérisé en ce que** l'élément d'absorption d'énergie (EI-1 à EI-n, EII-1 à EII-n, EIII-1 à EIII-n, EIV-1, E1, E2, E3) individuel est réalisé comme un élément sélectionné dans le groupe d'éléments suivant :
a) des équipements pour un appui au moins indirect entre l'espace de survie (V) et le cadre porteur (4), en particulier
- une structure de déformation, en particulier un corps spatial, de préférence un tube déformable (15),
- un équipement comprenant un élément présentant au moins une zone d'absorption d'énergie, de préférence un élément (15) réalisé comme un corps cylindrique ou un corps creux et comprenant un contre-élément (18) formant une buse (19) et coopérant avec celui-ci sous l'effet d'une force, de telle sorte que lors de l'application d'une composante de force d'impact dépassant une force d'impact critique prédéfinie et étant orientée dans le sens longitudinal du châssis vers la zone d'extrémité avant (5), la force d'impact est appliquée dans l'élément de telle sorte que celui-ci est comprimé par le contre-élément (18) par une déformation destructive ;
b) une structure rapportée ou superstructure qui est disposée en prenant appui respectivement sur
- l'espace de survie (V) ou une structure de cadre (10) résistante à la déformation qui entoure celui-ci,
- le cadre porteur (4), ou
- un autre élément d'absorption d'énergie (EI-1 à EI-n, EII-1 à EII-n, EIII-1 à EIII-n, EIV-1, E1, E2, E3) .
